# EUROPEAN PATENT SPECIFICATION

(11) **EP 2 311 031 B1**
(45) Date of publication and mention of the grant of the patent: **29.02.2012**
(21) Application number: 08774723.4
(22) Date of filing: 03.07.2008
(51) Int. Cl.: G10L 15/26, G11B 27/031, H04M 3/42, G10L 15/28

(54) **METHOD AND DEVICE FOR CONVERTING SPEECH**
VERFAHREN UND EINRICHTUNG ZUM UMSETZEN VON SPRACHE
PROCÉDÉ ET DISPOSITIF DE CONVERSION DE PAROLE

(43) Date of publication of application: 20.04.2011
(73) Proprietor: Mobiter Dicta Oy, 00260 Helsinki (FI)
(72) Inventor: KURKI-SUONIO, Risto, FI-00570 Helsinki (FI); COTTON, Andrew, 00260 Helsinki (FI)
(74) Representative: Värilä, Risto Sakari
(86) International application number: PCT/EP2008/058611
(87) International publication number: WO 2010/000321

(56) References cited:
- EP-A- 0 664 636
- US-A1- 2002 062 210
- US-A1- 2006 293 888
- OSTENDORF M ET AL: "Speech segmentation and spoken document processing" IEEE SIGNAL PROCESSING MAGAZINE, IEEE SERVICE CENTER, PISCATAWAY, NJ, US, vol. 25, no. 3, 1 May 2008 (2008-05-01), pages 59-69, XP011207718 ISSN: 1053-5888

## Description

### FIELD OF THE INVENTION

The present invention generally relates to electronic devices and communications networks. In particular, however not exclusively, the invention concerns speech to text conversion applications.

### BACKGROUND OF THE INVENTION

The current trend in portable, e.g. hand-held, terminals drives the evolution strongly towards intuitive and natural user interfaces. In addition to text, images and sound (for example speech) can be recorded at a terminal either for transmission or to control a preferred local or remote (i.e. network-based) functionality. Moreover, payload information can be transferred over the cellular and adjacent fixed networks such as the Internet as binary data representing the underlying text, sound, images, and video. Modem miniature gadgets like mobile terminals or PDAs (Personal Digital Assistant) may thus carry versatile control input means such as a keypad/keyboard, a microphone, different movement or pressure sensors, etc in order to provide the users thereof with a UI (User Interface) truly capable of supporting the greatly diversified data storage and communication mechanisms.

Notwithstanding the ongoing communication and information technology leap also some more traditional data storage solutions such as dictating machines seem to maintain considerable usability value especially in specialized fields such as law and medical sciences wherein documents are regularly created on the basis of verbal discussions and meetings, for example. It's likely that verbal communication is still the fastest and most convenient method of expression to most people and by dictating a memo instead of typing it considerable timesaving can be achieved. This issue also has a language-dependency aspect; writing Chinese or Japanese is obviously more time-consuming than writing most of the western languages, for example. Further, dictating machines and modern counterparts thereof like sophisticated mobile terminals and PDAs with sound recording option can be cleverly utilized in conjunction with other tasks, for example while having a meeting or driving a car, whereas manual typing normally requires a major part of the executing person's attention and cannot definitely be performed if driving a car, etc.

Until the last few years though, the dictation apparatuses have not served all the public needs so well; information may admittedly be easily stored even in real-time by just recording the speech signal via a microphone but often the final archive form is textual and someone, e.g. a secretary, has been ordered to manually clean up and convert the recorded raw sound signal into a final record in a different medium. Such arrangement unfortunately requires a lot of additional time-consuming conversion work. Another major problem associated with dictation machines arises from their analogue background and simplistic UI; modifying already stored speech is cumbersome and with many devices still utilizing magnetic tape as storage medium certain edit operations like inserting a completely new speech portion within the originally stored signal cannot be done. Meanwhile, modem dictation machines utilizing memory chips/cards may comprise limited speech editing options but the possible utilisation is still available only through rather awkward UI comprising only a minimum size and quality LCD (Liquid Crystal Display) screen etc. Transferring stored speech data to another device often requires manual twiddling, i.e. the storage medium (cassette/ memory card) must be physically moved.

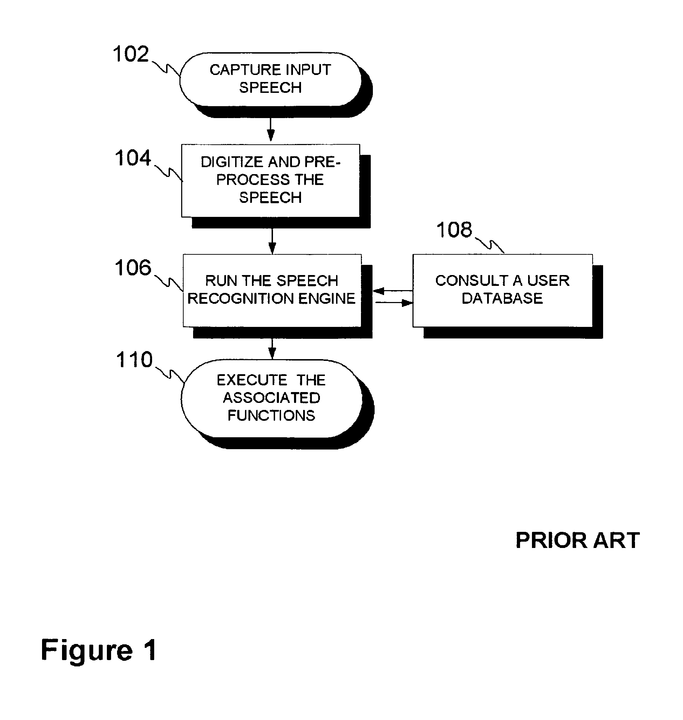

Computerized speech recognition systems have been available to a person skilled in the art for a while now. These systems are typically implemented as application-specific internal features (embedded in a word processor, e.g. Microsoft Word XP version), stand-alone applications, or application plug-ins to an ordinary desktop computer. Speech recognition process involves a number of steps that are basically present in all existing algorithms, see figure 1 for illustration of one particular example. Namely, the speech source signal emitted by a speaking person is first captured 102 via a microphone or a corresponding transducer and converted into digital form with necessary pre-processing 104 that may refer to dynamics processing, for example. Then the digitalized signal is input to a speech recognition engine 106 that divides the signal into smaller elements like phonemes based on sophisticated feature extraction and analysis procedures. The recognition software can also be tailored 108 to each user, i.e. software settings are user-specific. Finally the recognized elements forming the speech recognition engine output, e.g. control information and/or text, are used as an input 110 for other purposes; it may be simply shown on the display, stored to a database, translated into another language, used to execute a predetermined functionality, etc. as disclosed in publication EP0664636, "Audio conferencing system", R.A. Sharman et al., 26.07.1995.

Publication US6266642 discloses a portable unit arranged to perform spoken language translation in order to ease communication between two entities having no common language. Either the device itself contains all the necessary hardware and software for executing the whole translation process or it merely acts as a remote interface that initially funnels, by utilizing a telephone or a videoconference call, the input speech into the translation unit for processing, and later receives the translation result for local speech synthesis. The solution also comprises a processing step during which speech misrecognitions are minimized by creating a number of candidate recognitions or hypotheses from which the user may, via a UI, select the correct one or just confirm the predefined selection.

Despite the many advances the aforementioned and other prior art arrangements suggest for overcoming difficulties encountered in speech recognition and/or machine translation processes, some problems remain unsolved especially in relation to mobile devices. Problems associated with traditional dictation machines were already described hereinbefore. Further, many special user groups, such as disabled people including blind users, have been quite commonly forgotten in the UI design of more sophisticated speech recognition, speech-to-text conversion, or translation devices and services as the associated Uls still typically rely heavily on providing process guidance and data visualization features on a small-sized low contrast/low resolution display, for example.

Still further, many applications capable of recording and recognizing speech have been adapted to fully autonomously capture and process the input audio signal into predetermined target form after receiving an initial processing request that may refer to a signal created by depressing a corresponding initiation button on the UI of the associated device, for example. Nevertheless, although various fully automated functionalities are indeed generally welcome as they may overcome the need for over-exhaustive manual adjustments or continuous control, the automated solutions do not always provide a similar accuracy as manual or semi-automatic alternatives, and, what is equally important, the automated solutions sometimes put pressure on the user thereof as the user is forced to act unnaturally in a somewhat basic situation, i.e. the solution forces the user to adapt to the use scenario of the particular device applied, which may differ from the inborn, truly natural way of doing the associated task such as dictating. This may result in awkward user experience and inconvenience that finally drives the user to subliminally abstain from utilizing the device for such purpose.

### SUMMARY OF THE INVENTION

The object of the invention is to alleviate at least some of the aforementioned defects found in current speech archiving and speech-to-text conversion arrangements.

The object is achieved by a solution wherein an electronic device, e.g. a desktop, laptop or hand-held computer, a mobile terminal such as a GSM/UMTS/CDMA phone, a PDA, or a dictation machine, optionally equipped with a wireless communications adapter or transceiver, is provided with a functionality to obtain control information from the user of the device during a speech signal capturing operation to cultivate the ongoing or subsequent speech recognition, in particular speech-to-text conversion, procedure that is at least partially automated.

Accordingly, in an aspect of the invention there is provided an electronic device as et forth in claim 1 for facilitating speech to text conversion procedure comprising:
- a speech input means for obtaining a digital speech signal,
- a control input means for communicating a control command relating to the digital speech signal while obtaining the digital speech signal,
- a processing means for temporally associating the control command with a substantially corresponding time instant in the digital speech signal to which the control command was directed,
wherein the control command determines one or more punctuation marks, symbols, or other control elements implying text manipulation, to be physically, as such in the case of said punctuation marks and symbols, or at least logically, via the manipulation of text in the case of said other control elements, positioned at a text location corresponding to the communication instant relative to the digital speech signal so as to procure the speech to text conversion procedure locally, in which case the device further comprises a speech recognition engine for performing tasks of speech to text conversion, or remotely, in which case the electronic device further comprises a data transfer means for sending digital data representing the digital speech signal and the control command to a remote entity for the conversion, or by a shared conversion procedure between the electronic device and the remote entity, in which case the electronic device further comprises at least part of the speech recognition engine and said data transfer means.

The device may thus position the elements in the conversion result (text) as indicated by the timing of their acquisition relative to the speech signal but optionally also initiate one or more predetermined other actions, or "tasks", such as a recording pause of predetermined length, in response to obtaining the control command. The actions may be initiated immediately after obtaining the command or in a delayed fashion, e.g. with a predetermined delay.

The electronic device may, additionally, in another aspect, comprise a special aid especially targeted for blind or weak-eyed persons by providing functionality for confirming uncertain, according to predetermined criterion, speech-to-text converted text portions via a number of mutually ranked options.

Therefore, the electronic device for carrying out at least part of a speech to text conversion procedure may additionally comprise
- a processing or data transfer means for obtaining at least partial speech to text conversion result including a converted portion, such as one or more words or sentences, which comprises multiple, two or more, user-selectable conversion result options,
- an audio output means for audibly reproducing one or more of said options for said portion, and
- a control input means for communicating a user selection of one of said multiple user-selectable options so as to enable confirming a desired conversion result for said portion.

In both aspects, the device may act as a remote terminal for speech recognition/speech to text conversion engine residing over a communications connection. Alternatively, the device may itself include the engine without a need for contacting external elements. Also a mixed solution with task sharing is possible as to be described hereinafter.

The user may, on the basis of the audible reproduction, which does not hinder from using additional or alternative other reproduction means such as visual or tactile means either, select a proper conversion result from multiple options. The options may be ranked and reproduced according to their preliminary relevance, for instance. As a consequence, if the user hears the correct option first, which preferably happens quite often, he may immediately confirm the selection instead of listening other, inevitably inferior, options as well. For situations wherein none of the options is correct, a predetermined UI means may be selected to ignore all the represented options, whereby the device may be adapted to record the related speech portion once more for repeated recognition and optionally user-selection of a proper text alternative.

Preferably the aforesaid portion(s) are selected so as to cover only a small part of the whole conversion result such that the user does not have to double-check and manually verify the result of every single conversion second, which may be guaranteed by providing the options only for the most unreliable portions of e.g. words or sentences. The number of such most unreliable portions selected for user confirmation may be restricted absolutely or per predetermined time unit and/or amount of text, for example.

The reproduction may utilize a text-to-speech synthesizer applying a speech production model, such as a formant synthesis model, and/or some other solution such as a sample bank, i.e. recorded speech. The reproduction preferences may be adjustable. For example, synthesis voice, speed, or volume may be selectable by the user depending on the embodiment.

In both aspects, the control input means may refer to e.g. one or more buttons, keys, knobs, a touch screen, optical input means, voice recognition controller, etc. being at least functionally connected to the device. The speech input means may refer to one or more microphones or connectors for external microphones, and A/D conversion means, or to an interface for obtaining already digital form speech signal from an external source such as a digital microphone supplied with a transmitter. The processing means may refer to one or more microprocessors, microcontrollers, programmable logic chips, digital signal processors, etc. The data transfer means may refer to one or more wired or wireless data interfaces, such as transceivers, to external systems or devices. The audio output means may refer to one or more loudspeakers or connectors for external loudspeakers or other audio output means, for example.

The electronic device optionally comprises a UI that enables the user, through visualization or via other means, to edit the speech signal before it is exposed to the actual speech recognition and optional, e.g. translation, processes. Moreover, in some embodiments of the invention communication between the device and an external entity, e.g. a network server residing in the network whereto the device has access, may play an important role. The device and the external entity may be configured to divide the execution of the speech to text conversion and further actions based on a number of advantageously user-definable parameter values relating to amongst other possible factors local/remote processing/memory load, battery status, existence of other tasks and priority thereof, available transmission bandwidth, cost-related aspects, size/duration of the source speech signal, etc. The device and the external entity may even negotiate a suitable co-operation scenario in real-time based on their current conditions, i.e. task sharing is a dynamic process. Also these optional issues are discussed hereinafter in more detail. The conversion process as a whole may thus be interactive among the user of the device, the device itself and the external entity. Additionally, the speech recognition process can be personalized in relation to each user, i.e. the recognition engine can be separately configured or trained to adapt to his speech characteristics.

In one scenario the electronic device may be a mobile device operable in a wireless communications network comprising a speech input means for receiving speech and converting the speech into a representative digital speech signal, a control input means for communicating an edit command relating to the digital speech signal, a processing means for performing a digital speech signal editing task responsive to the received edit command, at least part of a speech recognition engine for carrying out tasks of a digital speech signal to text conversion, and a transceiver for exchanging information relating to the digital speech signal and speech to text conversion thereof with an external entity functionally connected to said wireless communications network.

In the above scenario the edit command and the associated task may be related but not limited to one of the following options: deletion of a portion of the speech signal, insertion of a new speech portion in the speech signal, replacement of a portion in the speech signal, change in the amplitude of the speech signal, change in the spectral content of the speech signal, re-recording a portion of the speech signal. Preferably the mobile device includes display means for visualizing the digital speech signal so that the edit commands may relate to the visualized signal portion(s).

The speech recognition engine may comprise a framework, e.g. analysis logic, in a form of tailored hardware and/or software that is required for executing at least part of the overall speech-to-text conversion process starting from the digital form speech. A speech recognition process generally refers to an analysis of an audio signal (comprising speech) on the basis of which the signal can be further divided into smaller portions and the portions be classified. Speech recognition thus enables and forms (at least) an important part of the overall speech to text conversion procedure of the invention, although the output of mere speech recognition engine could also be something else than the text representing textually the spoken speech; e.g. in voice control applications the speech recognition engine associates the input speech with a number of predetermined commands the host device is configured to execute. The whole conversion process typically includes a plurality of stages and thus the engine may perform only part of the stages or alternatively, the speech signal may be divided into "parts", i.e. blocks or "frames", which are converted by one or more entities. How the task sharing can be performed is discussed hereinafter. The (mobile) device may in minimum scenario only take care of pre-processing the digital speech in which case the external device will execute the computationally more demanding, e.g. brute-force, analysis steps.

Correspondingly, the information exchange refers to the interaction (information reception and/or transmission) between the electronic device and the external entity in order to execute the conversion process and optional subsequent processes. For example, the input speech signal may be either completely or partially transferred between the aforesaid at least two elements so that the overall task load is shared and/or specific tasks are handled by a certain element as mentioned in the previous paragraph above. Moreover, various parameter, status, acknowledgment, and control messages may be transferred during the information exchange step. Further examples are described in the detailed description. Data formats suitable for carrying speech or text are also discussed.

In a further aspect, there is provided a server for carrying out at least part of speech to text conversion as set forth in claim 6, server being operable in a communications network, the server comprising:
- a data input means for receiving digital data sent by a terminal device, said digital data representing speech signal, and one or more control commands, each command temporally associated with a certain time instant in the digital data and determining one or more punctuation marks, symbols, or other control elements implying text manipulation, and
- at least part of a speech recognition engine for carrying out tasks of digital data to text conversion, wherein the engine is adapted to position physically, as such in the case of said punctuation marks and symbols, or at least logically, via the manipulation of text in the case of said other control elements, each said punctuation mark, symbol or other control element implying text manipulation at a text location corresponding to the certain time instant relative to the speech signal represented by the received digital data so as to cultivate the speech to text conversion procedure at least partially procured by the server.

The server may further comprise a data output means for communicating at least part of the output of the performed tasks to an external entity.

Additionally, the server may, in another aspect, provide a special aid for blind or weak-eyed persons by providing functionality for confirming uncertain, according to predetermined criterion, speech-to-text converted text portions via a number of mutually ranked options.

Accordingly the said at least part of the recognition engine of the server may additionally be configured to produce a speech to text conversion result including a converted portion, such as one or more words or sentences, comprising multiple, two or more, conversion result options, when the correctness of the conversion result is deemed as uncertain for the portion according to predetermined criterion, and a data output means for communicating the conversion result and at least indication of the options to the terminal or another remote device and optionally triggering the terminal comprising a text-to-speech synthesizer and an audio output means, or another remote device, to audibly reproduce one or more of said options so as to enable confirming a desired conversion result for the portion by the user of the terminal or another remote device in response to the audible reproduction.

Triggering the reproduction may take place via an explicit or implicit request, for example. In implicit case, the software of the terminal is configured to automatically audibly reproduce at least one option upon receipt thereof. The explicit request may include a separate message or e.g. a certain parameter value in a more generic message.

The various aforesaid aspects of electronic devices and servers may be combined into a system comprising at least one electronic terminal device and one server apparatus for cultivated speech to text recognition. Concerning optional task sharing, the system for converting speech into text may comprise a terminal device, e.g. a mobile terminal, operable in a wireless communications network and a server functionally connected to the wireless communications network, wherein the terminal device is configured to receive speech and convert the speech into a representative digital speech signal, to exchange information relating to the digital speech signal and speech to text conversion thereof with the server, and to execute part of the tasks required for carrying out a digital speech signal to text conversion, and said server is configured to receive information relating to the digital speech signal and speech to text conversion thereof, and to execute, based on the exchanged information, the remaining part of the tasks required for carrying out a digital speech signal to text conversion.

The "server" refers herein to an entity, e.g. an electronic apparatus such as a computer that co-operates with the electronic device of the invention in order to obtain the source speech signal, perform the speech to text conversion, represent the results, or execute possible additional processes. The entity may be included in another device, e.g. a gateway or a router, or it can be a completely separate device or a plurality of devices forming the aggregate server entity of the invention.

Yet in a further aspect, there is provided for a method as set forth in claim 9 for converting speech into text comprising:
- obtaining a digital speech signal and a control command relating thereto in a temporally overlapping fashion, wherein the control command determines one or more punctuation marks, symbols, or other control elements implying text manipulation,
- associating the control command with a substantially corresponding time instant in the digital speech signal to which the control command was directed, and
- performing a speech to text conversion, wherein each punctuation mark, symbol or other control element implying text manipulation determined by the control command is physically, as such in the case of said punctuation marks and symbols, or at least logically, via the manipulation of text in the case of said other control elements, positioned at a text location corresponding to the communication instant relative to the speech signal so as to procure the speech to text conversion procedure.

In a supplementary aspect, the method for carrying out at least part of a speech to text conversion procedure by one or more electronic devices may further comprise:
- obtaining a speech to text conversion result including a converted portion, such as one or more words or sentences, which comprises multiple, two or more, conversion result options,
- audibly reproducing one or more of said options,
- obtaining a user confirmation of one of said one or more options,
- selecting the conversion in respect of the converted portion in accordance with the obtained confirmation.

Additionally, the devices may exchange information relating to the digital speech signal and speech to text conversion thereof for task sharing purposes, for example.

Yet, the digitalized speech signal may be visualized on a terminal display so that editing and confirmation tasks may also be based on the visualization.

The utility of the invention is due to several factors. The control commands and associated punctuation marks or other elements provide several benefits. First of all, the resulting text may be conveniently finalized already during dictation as separate hyphenation round for placing e.g. punctuation may be omitted. Secondly, the speech recognition engine may provide enhanced accuracy as the available real-time metadata explicitly tells the engine the substantially exact position of at least some of such punctuation marks or other elements. The conversion results located before and after the metadata positions may be easier to figure out as the punctuation and other fixed guiding points and their nature may provide additional source information for calculating the most probable recognition and conversion results. The audible reproduction feature of conversion options enables also auditory analysis and verification of conversion results in addition to or instead of mere visual verification. This is a particular benefit for blind or weak-eyed persons who may still be keen on utilizing speech-to-text conversion tasks. Additionally, sharp-eyed persons may exploit the audible verification feature when they prefer using their vision for other purposes.

By the aid of several examples of the present invention one may generate a textual form messages for archiving and/or communications purposes with ease by speaking to his electronic, possibly mobile, device and optionally editing the speech signal via the UI while the device and the remotely connected entity automatically take care of the exhaustive speech to text conversion. Communication practise between the mobile device and the entity can support a plurality of different means (voice calls, text messages, mobile data transfer protocols, etc) and the selection of a current information exchange method can be even made dynamically based on network conditions, for example. The resulting text and/or the edited speech may be communicated forward to a predetermined recipient by utilizing a plurality of different technologies and communication techniques including the Internet and mobile networks, intranets, voice mail (speech synthesis required to the resulting text), e-mail, SMS/MMS messages, etc. Text as such may be provided in editable or read-only form. Applicable text formats include plain ASCII (and other character sets), Ms Word format, and Adobe Acrobat format, for example.

The electronic device of the various examples of the present invention may be a device or be at least incorporated in a device that the user carries with him in any event and thus additional load is not introduced. As the text may be further subjected to a machine translation engine, the invention also facilitates multi-lingual communication. Provided manual editability of the speech signal enables the user to verify and cultivate the speech signal prior to the execution of further actions, which may spare the system from unnecessary processing and occasionally improve the conversion quality as the user can recognize e.g. inarticulate portions in the recorded speech signal and replace them with proper versions. The possible task sharing between the electronic device and the external entity may be configurable and/or dynamic, which greatly increases the flexibility of the overall solution as available data transmission and processing/memory resources without forgetting various other aspects like battery consumption, service pricing/contracts, user preferences, etc can be taken into account even in real-time upon exploitation of the invention, both mobile device and user specifically. Personalization aspect of the speech recognition part of the invention respectively increases the conversion quality.

The core of the current invention can be conveniently expanded via additional services. For example, manual/automatic spelling check or language translation/translation verification services may be introduced to the text either directly by the operator of the server or by a third party to which the mobile device and/or the server transmits the conversion results. In addition, the server side of the invention may be updated with the latest hardware/software (e.g. recognition software) without necessarily raising a need for updating the electronic, such as mobile, device(s). Correspondingly, the software can be updated through communication between the device and the server. From a service viewpoint such interaction opens up new possibilities for defining a comprehensive service level hierarchy. As e.g. mobile devices, e.g. mobile terminal, typically have different capabilities and the users thereof are able to spend a varying sum of money (e.g. in a form of data transfer costs or direct service fees) for utilizing the invention, diverse versions of the mobile software may be available; differentiation can be implemented via feature locks/activation or fully separate applications for each service level. For example, on one level the network entities shall take care of most of the conversion tasks and the user is ready to pay for it whereas on another level the mobile device shall execute a substantive part of the processing as it bears the necessary capabilities and/or the user does not want to utilize external resources in order to save costs or for some other reason.

In one example of the invention a speech to text conversion arrangement following the afore-explained principles is applied such that a person used to dictating memos utilizes his multipurpose computing device for capturing a voice signal in co-operation with the simultaneous, control command -based, editing/sectioning feature. In another, either stand-alone or supplementary, example the audible reproduction of conversion result options is exploited for facilitating determination of the final conversion result. Variations of the examples are disclosed as well.

### BRIEF DESCRIPTION OF THE DRAWINGS

In the following, the invention is described in more detail by reference to the attached drawings, wherein
Fig. 1 illustrates a flow diagram of a prior art scenario relating to speech recognition software.
Fig. 2a illustrates an example of the present invention wherein one or more control commands are provided during the speech recording procedure for cultivating the speech to text conversion.
Fig. 2b illustrates a scenario, which may co-operate with the example of figure 2a or be used independently, wherein multiple speech to text conversion options are provided and one or more of them are audibly reproduced for obtaining confirmation of the desired option.
Fig. 2c visualizes communication and/or task sharing between multiple devices during the speech to text conversion procedure.
Fig. 3a discloses a flow diagram of one option for carrying out a first example of the method of the present invention.
Fig. 3b discloses another flow diagram for carrying out a second, either independent or supplementary example of the method in accordance with the present invention.
Fig. 3c discloses a flow diagram concerning signal editing and data exchange potentially taking place in the context of the present invention.
Fig. 4 discloses a signalling chart showing information transfer possibilities between devices for implementing a desired example of the current invention.
Fig. 5 represents one, merely exemplary, embodiment of speech recognition engine internals with a number of tasks.
Fig. 6 is a block diagram of an example of an electronic device of the present invention.
Fig. 7 is a block diagram of an example of a server entity according to the present invention.

### DETAILED DESCRIPTION OF THE EMBODIMENTS

Figure 1 was already reviewed in conjunction with the description of related prior art.

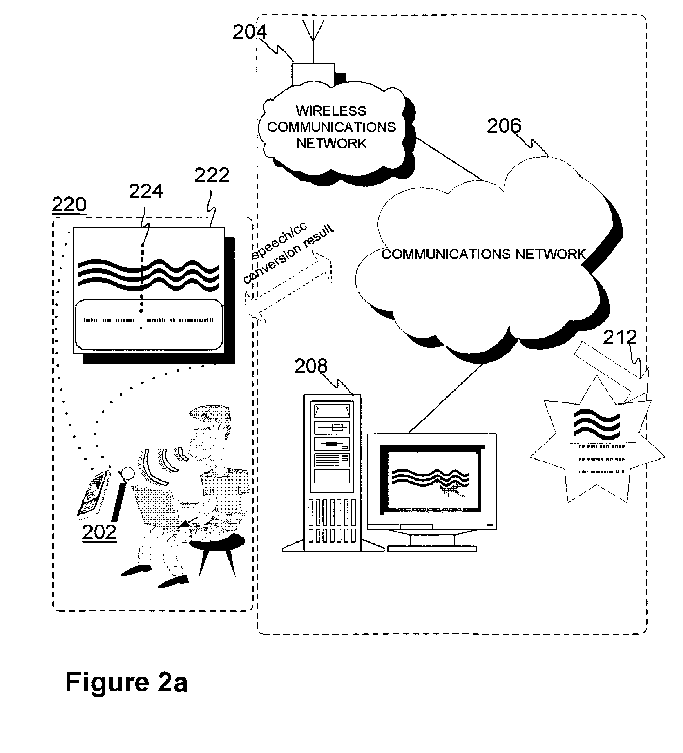

Figure 2a discloses an example of the present invention wherein a control command is provided during the speech recording procedure for cultivating the speech to text conversion concerning particularly the speech instant and corresponding text position relative to which the command was given.

The electronic device 202 may be a mobile terminal, a PDA, a dictation machine, or a desktop or laptop computer, for example. Two options, namely a mobile terminal and a laptop computer, are explicitly illustrated in the figure. The device 202 is provided with means including both hardware and software (logic) for inputting speech. The means may include a microphone for receiving an acoustic signal and an A/D converter for converting it into digital form. Alternatively, the means may merely receive an already captured digital form audio signal from a remote device such as a wireless or wired microphone. Further, the device comprises an integrated or at least functionally connected control input means such as a keypad, a keyboard, button(s), knob(s), slider(s), remote control, voice controller (incorporating microphone and interpretation software, for example), or e.g. a touch screen for inputting a control command simultaneously with obtaining the digital speech signal. The device 202 thus monitors one or more similar or different control commands from the user of the device while obtaining the digital speech signal. The device 202 is configured to temporally associate the control command with a substantially corresponding time instant in the digital speech signal upon which the control command was communicated. Such association may be accomplished by dictation software or other software running in the device 202.

The control input means may comprise a plurality of input elements such as different keys that may be associated, e.g. via the software, with different, preferably user-definable, control elements such as punctuation marks or another, optionally symbolic, elements indicated by the control commands to cultivate the speech to text conversion procedure. One input element may be associated with at least one control element, but e.g. rapid multiple activation of the same input element may also imply, via a specific command or two similar temporally adjacent commands, a control element different from the one of more isolated activation. The control element may include different punctuation marks or other symbols including, but not limited to, any element selected from a group consisting of: colon, comma, dash, apostrophe, bracket (with e.g. brackets or other paired elements, the same input element may initially, upon first instance of activation, refer to an opening bracket/element and then, upon the following instance, to a closing bracket/element, or, the opening and closing brackets/elements may be assigned to different input elements), ellipsis, exclamation mark, period, guillemet, hyphen, question mark, quotation mark, semicolon, slash, number sign, currency symbol, section sign, asterisk, backslash, line feed, and space. Thus the control elements may be introduced as such to the converted text, and/or they may imply performing some text manipulation (e.g. inserting spaces or rows, a big starting letter, deleting a predetermined previous section, e.g. until a previous element such as a period, etc.) into the associated position. Therefore, it can be said that the elements are at least logically positioned at a text location corresponding to the communication instant relative to the digital speech signal so as to cultivate the speech to text conversion procedure.

The control elements may facilitate the speech recognition process as e.g. the probability of the existence of a certain predetermined wording near a predetermined control element, such as a punctuation mark (i.e. the context), may be generally bigger than the probability of the existence of other wordings in connection with that particular element, and if one or more local recognition results are otherwise uncertain due to the fact that the input signal equally matches several different recognition options, the control command may define an element such as a punctuation mark that affects the probabilities and therefore potentially facilitates selecting the most probable recognition result concerning the preceding, following, or surrounding text.

In addition, at least some of the commands may be associated with supplementary tasks such as a recording pause of predetermined length. The pause (beginning and/or end) or other function may be indicated to the user of the device 202 by a visual (display), tactile (e.g. vibration) or audio (through a loudspeaker) sign, for example. E.g. input associated with a period or comma could also be linked with a pause so that the user may proceed dictating naturally and collect his thoughts for the next sentence etc. Preferably the user may configure the associations between different commands, input elements, and/or supplementary tasks.

The device 202 may record the speech and associated control command data locally first, or real-time buffer it and forward to a remote server 208 that may be connected to the device 202 via one or more wireless 204 and/or wired 206 communications networks. In the former case, the device 202 may, after acquiring all the data, pass it forward for remote speech recognition and speech to text conversion.

Alternatively, the device 202 may comprise all the necessary means for locally performing the speech to text conversion, which is illustrated by the rectangle 220 whereas external/remote elements 204, 206, and 208 are illustrated within a neighbouring rectangle form. In a further alternative, task sharing between local and remote devices may be applied as to be reviewed in more detail later in this document. Reference numeral 212 implies data transfer, e.g. conversion result output, to further external entities.

Typically wireless networks comprise radio transceivers called e.g. base stations or access points for interfacing the terminal devices. Wireless communication may also refer to exchanging other types of signals than mere radio frequency signals, said other types of signals including e.g. infrared or ultrasound signals. Operability in some network refers herein to capability of transferring information.

The wireless communications network 204 may be further connected to other networks, e.g. a (wired) communications network 206, through appropriate interfacing means, e.g. routers or switches. Conceptually e.g. the wireless network 204 may also be located directly in the communications network 206 if it consists of nothing more than a wireless interface for communicating with the wireless terminals in range. One example of the communications network 206 that also encompasses a plurality of sub-networks is the Internet.

In case one or more external entities such as the server 208 take care of at least part of the overall process, different data transfer activities may take place from/to the device 202 as illustrated by the broken bi-directional arrow. For instance, digital speech data, control command (cc) data, and converted text may be transferred.

At 222 an illustration of a speech to text conversion procedure cultivated by the real-time control command acquisition procedure is presented. A wavy form illustrates a recorded audio signal comprising speech and the vertical broken line 224 indicates a time instant at which the user of the device 202 provided a control command associated with a period or other element that is placed in the corresponding location in the conversion result. Suchlike illustration can also be provided on a display of the device 202, if desired.

Instead of or in addition to acquisition of control command data while obtaining the speech signal, control commands may be recorded afterwards during playback of an already recorded audio signal, for example.

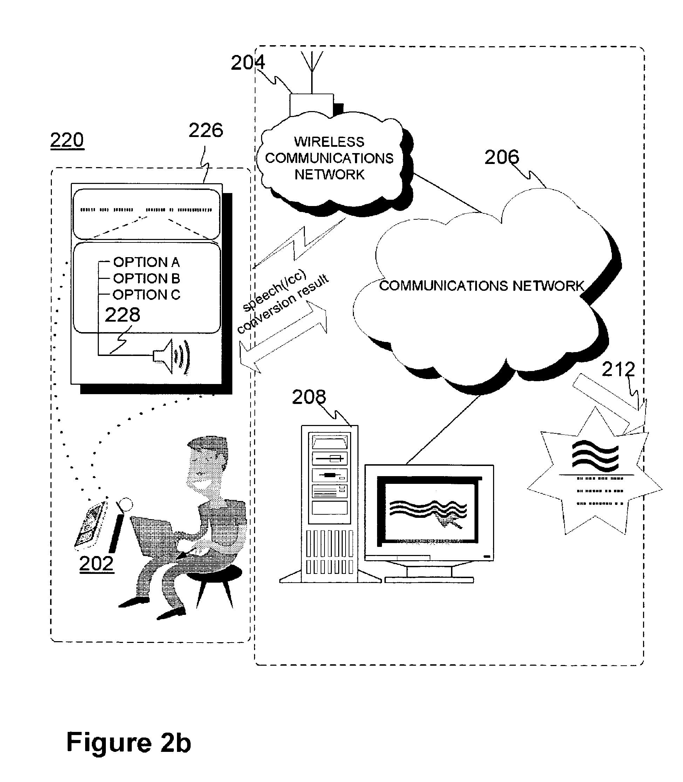

Figure 2b discloses a scenario that may be integrated with the example of figure 2a, or implemented as an independent solution. Data transfer between different entities may generally take place as in the previous example or the device 202 may again be fully autonomous with respect to the performed tasks.

In the illustrated example, the device 202, the server 208, or a combination of several entities such as the device 202 and the server 208, have processed the input speech signal such that a conversion result text 226 has been obtained with one or more converted portions extending from a single symbol or word to a sentence, for example, each of which including multiple, i.e. two or more, conversion result options. The options are preferably represented to the user for review and selection/confirmation in predetermined order, e.g. most probable option first. The options are preferably audibly reproduced via TTS (text to speech) technology and e.g. one or more loudspeakers, by the device 202, but alternatively or additionally, also visual or e.g. tactile reproduction may be utilized. In visual reproduction, options may be shown as a sequence or a list (horizontal or vertical) on a display, one or more options at a time. In the case of multiple simultaneously shown options the currently selected one may be shown as highlighted. In tactile reproduction, e.g. a vibration element/unit coupled to the device 202 may signal the options using a well-defined code such as Morse code. See e.g. the illustration 228 in rectangle 226 (a display view, for example) depicting a conversion result portion indicated by the broken lines and bearing three probable, selected according to a predetermined criterion, options.

In one example, the actual options and optional guiding signals (e.g. request to select the desired option by actuating a predetermined UI input element) may be audibly reproduced upon throughout the reproduction of the overall conversion result, i.e. the device 202 may be configured to audibly reproduce the whole conversion result such as a dictated document, and to ask from the user upon instance of each of aforesaid portions which option should be selected as the final converted portion.

In another example, at least the aforesaid portions and optionally guiding signals will be reproduced to the user for selection.

In one example, the most probable option is reproduced first such that if the user is happy with it, he/she may immediately accept it and save some time from reviewing the other inferior options.

The control input means may again comprise keys, knobs, etc. as already reviewed in connection with the example of figure 2a.

After obtaining the user selection of the desired option for one or more aforesaid portions, the left-out options may be deleted and the selected one be embedded in the final conversion result.

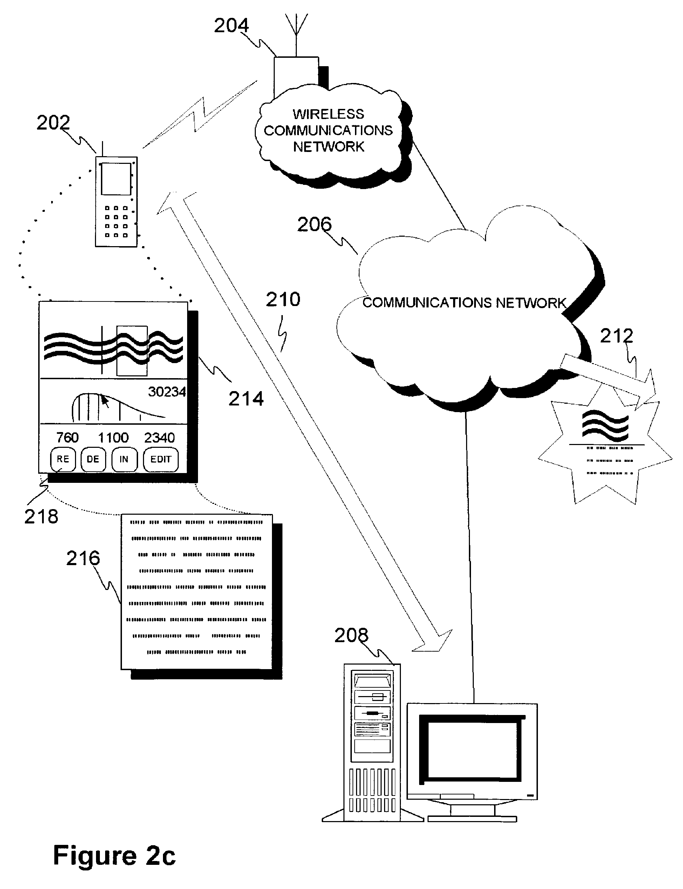

Figure 2c discloses a sketch of a system, by way of example only, adapted to carry out one scenario of the conversion arrangement of the invention as described hereinbefore under the control of a user who favours recording his messages and conversations instead of typing them into his multipurpose mobile or other electronic device providing a UI to the rest of the system. One or more features of this scenario may be combined with the features of the examples of figure 2a and/or figure 2b. The electronic device 202, such as mobile terminal or a PDA with an internal or external communications means, e.g. a radio frequency transceiver, is operable in a wireless communications network 204 like a cellular network or WLAN (Wireless LAN) network capable of exchanging information with the device 202.

The device 202 and the server 208 exchange information 210 via networks 204, 206 in order to carry out the overall speech to text conversion process. A speech recognition engine is located in the server 208 and optionally at least partly in the device 202. The resulting text and/or edited speech may be then communicated 212 towards a remote recipient within or outside said wireless communications 204 and communications 206 networks, an electronic archive (in any network or within the device 202, e.g. on a memory card), or a service entity taking care of further processing, e.g. translation, thereof. Further processing may alternatively/additionally be performed at the server 208.

In one supplementary or stand-alone example of the present invention, a user may be willing to embed new speech or textual data into an existing speech sample (e.g. a file) or text converted therefrom, respectively. For example, the user dictates e.g. a 30 minute amount of speech but then realizes he wants to say something further either a) which can be dropped in between two other previously recorded sound files or b) into an existing sound file. The device 202 and/or the server 208 may then be configured to embed the new speech data into the existing speech sample directly or via metadata (e.g. via a link file that temporally associates a plurality of speech sample files) for subsequent conversion of all speech data in one or more files. In case the original 30 minutes' portion has already been converted into text, the user may just define either in the source audio file and/or the resulted text file via the UI a proper location for new speech portion and corresponding text such that only the new speech portion may be then converted into text and embedded in the already available conversion result. As an implementation example, the user may listen or visually scroll through the original speech and/or the resulted text and determine a position for insert type of new recording which is then to be performed, whereupon the device 202 and/or the remote server 208 take care of the remaining procedures such as speech to text conversion, data transfer, or conversion results' integration.

Reverting back to figure 2c, blocks 214, 216 represent potential screen view snapshots of the device 202 taken upon the execution of the overall text to speech conversion procedure. Snapshot 214 illustrates an option for visualizing, by a conversion application, the input signal (i.e. the input signal comprising at least speech) to the user of the device 202. The signal may indeed be visualized for review and editing by capitalizing a number of different approaches: the time domain representation of the signal may be drawn as an envelope (see the upper curve in the snapshot) or as a more coarse graph (e.g. speech on/off type or other reduced resolution time domain segmentation, in which case the reduced resolution can be obtained from the original signal by dividing the original value range thereof into a smaller number of threshold-value limited sub-ranges, for example) based on the amplitude or magnitude values thereof, and/or a power spectrum or other frequency/altemative domain parameterization may be calculated therefrom (see the lower curve in the snapshot).

Several visualization techniques may even be applied simultaneously, whereby through e.g. a zoom (/unzoom) or some other functionality a certain part of the signal corresponding to a user-defined time interval or a sub-range of preferred parameter values can be shown elsewhere on the screen (see the upper and lower curves of the snapshot 214 presented simultaneously) with increased (/decreased) resolution or via an alternative representation technique. In addition to the signal representation(s), the snapshot 214 shows various numeric values determined during the signal analysis, markers (rectangle) and pointer (arrow, vertical line) to the signal (portion), and current editing or data visualization functions applied or available, see reference numeral 218. In case of a touch-sensitive screen, the user may advantageously paint with his finger or stylus a preferred area of the visualized signal portion (signal may advantageously be scrolled by the user if it does not otherwise fit the screen with a preferred resolution) and/or by pressing another, predetermined area specify a function to be executed in relation to the signal portion underlying the preferred area. A similar functionality may be provided to the user via more conventional control means, e.g. a pointer moving on the screen in response to the input device control signal created by a trackpoint controller, a mouse, a keypad/keyboard button, a directional controller, a voice command receiver, etc.

From the visualized signal the user of the device 202 can rapidly recognize, with only minor experience required, the separable utterances such as words and possible artefacts (background noises, etc) contained therein and further edit the signal in order to cultivate it for the subsequent speech recognition process. If e.g. an envelope of the time domain representation of the speech signal is shown, lowest amplitude portions along the time axis correspond, with a high likelihood, to the silence or background noise while the speech utterances contain more energy. In the frequency domain the dominant peaks are respectively due to the actual speech signal components.

The user may input and communicate signal edit commands to the device 202 via the UI thereof. Signal edit functions associated with the commands shall preferably enable comprehensive inspection and revision of the original signal, few useful examples being thereby next disclosed.

User-defined (for example, either selected with movable markers/pointers or "painted" on the UI such as the touch screen as explained above) portion of the signal shall be replaceable with another, either already stored or real-time recorded portion. Likewise, a portion shall be deletable so that the adjacent remaining portions are joined together or the deleted portion is replaced with some predetermined data representing e.g. silence or low-level background noise. At the ends of the captured signal such joining procedure is not necessary. The user may be allocated with a possibility to alter, for example unify, the amplitude (relating volume/loudness) and spectral content of the signal, which may be carried out through different gain control means, normalization algorithms, an equalizer, a dynamic range controller (including e.g. a noise gate, expander, compressor, limiter), etc. Noise reduction algorithms for clearing up the degraded speech signal from background fuss are more complex than noise gating but advantageous whenever the original acoustic signal has been produced in noisy conditions. Background noise shall preferably be at least pseudo-stationary to guarantee adequate modelling accuracy. The algorithms model background noise spectrally or via a filter (coefficients) and subtract the modelled noise estimate from the captured microphone signal either in time or spectral domain. In some solutions the noise estimate is updated only when a separate voice activity detector (VAD) notifies there is no speech in the currently analysed signal portion. The signal may generally be classified as including noise only, speech only, or noise + speech.

The conversion application may store a number of different signal editing functions and algorithms that are selectable by the user as such, and at least some of them may be further tailored by the user for example via a number of adjustable parameters.

Cancel functionality, also known as "undo" functionality, being e.g. a program switch for reverting to the signal status before the latest operation, is preferably included in the application so as to enable the user to safely experiment with the effects of different functionalities while searching for an optimal edited signal.

Whenever the editing occurs at least partially simultaneously with the speech recognition, even only the so-far resulted text may be visualized on the screen of the device 202. This may require information transfer between the server 208 and the device 202, if the server 208 has participated in converting the particular speech portion from which the so-far resulted text has originated. Otherwise, snapshot 216 is materialized after completing the speech to text conversion. Alternatively, the text as such is never shown to the user of the device 202, as it is, by default, directly transferred forward to the archiving destination or a remote recipient, preferably depending on the user-defined settings.

One setting may determine whether the text is automatically displayed on the screen of the device 202 for review, again optionally together with the original or edited speech signal, i.e. the speech signal is visualized as described hereinbefore whereas the resulting text portions such as words are shown above or below the speech as being aligned in relation to the corresponding speech portions. Data needed for the alignment is created as a by-product in the speech recognition process during which the speech signal is already analysed in portions. The user may then determine whether he is content with the conversion result or decide to further edit the preferred portions of the speech (even re-record those) and subject them to a new recognition round while keeping the remaining portions intact, if any. This type of recursive speech to text conversion admittedly consumes more time and resources than the more straightforward "edit once and convert" -type basic approach but permits more accurate results to be achieved. Alternatively, at least part of the resulting text can be corrected by manually inputting corrections in order to omit additional conversion rounds without true certainty of more accurate results.

Although the input audio signal comprising the speech is originally captured by the device 202 through a sensor or a transducer such as a microphone and then digitalized via an A/D converter for digital form transmission and/or storing, even the editing phase may comprise information transfer between the device 202 and other entities such as the server 208 as anticipated by the above recursive approach. Respectively, the digital speech signal may be so large in size that it cannot be sensibly stored in the device 202 as such; therefore it has to be compressed locally, optionally in real-time during capturing, utilizing a dedicated speech or more generic audio encoder such as GSM, TETRA, G.711, G.721, G.726, G.728, G.729, or various MPEG-series coders. In addition, or alternatively, the digital speech signal may, upon capturing, be transmitted directly (including the necessary buffering though) to an external entity, e.g. the server 208, for storage and optionally encoding, and be later retrieved back to the device 202 for editing. In extreme case the editing takes place in the server 208 such that the device 202 mainly acts as a remote interface for controlling the execution of the above-explained edit functions in the server 208. For that purpose, both speech data (for visualization at the device 202) and control information (edit commands) have to be transferred between the two entities 202, 208.

Information exchange 210 as a whole may incorporate a plurality of different characteristics of the conversion arrangement. In one aspect of the invention, the device 202 and the server 208 share the tasks relating to the speech to text conversion. Task sharing inherently implies also information exchange 210 as at least portion of the (optionally encoded) speech has to be transferred between the device 202 and the server 208.

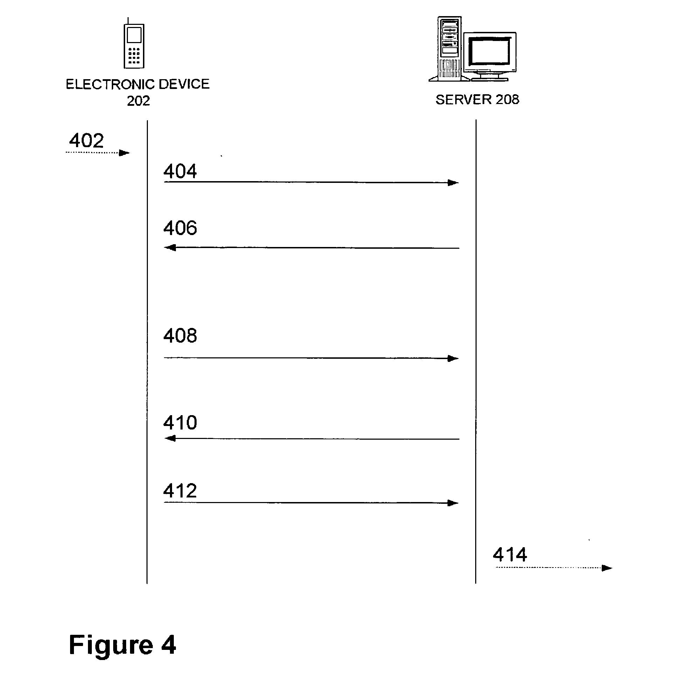

Conversion applications in the device 202 and optionally in the server 208 include or have at least access to settings for task (e.g. function, algorithm) sharing with a number of parameters, which may be user-definable or fixed (or at least not freely alterable by the user). The parameters may either explicitly determine how the tasks are divided between the device 202 and the server 208, or only supervise the process by a number of more generic rules to be followed. E.g. certain tasks may be always carried out by the device 202 or by the server 208. The rules may specify sharing of the processing load, wherein either relative or absolute load thresholds with optional further adaptivity/logic are determined for the loads of both the device 202 and the server 208 so as to generally transfer part of the processing and thus source data from the more loaded entity to the less loaded one. If the speech to text conversion process is implemented as a subscription based service including a number of service levels, some conversion features may be disabled on a certain (lower) user level by locking them in the conversion application, for example. Locking/unlocking functionality can be carried out through a set of different software versions, feature registration codes, additional downloadable software modules, etc. In the event that the server 208 cannot implement some of the lower level permitted tasks requested by the device 202 e.g. during a server overload or server down situation, it may send an "unacknowledgement" message or completely omit sending any replies (often acknowledgements are indeed sent as presented in figure 4) so that the device 202 may deduce from the negative or missing acknowledgement to execute the tasks by itself whenever possible.

The device 202 and the server 208 may negotiate a co-operation scenario for task sharing and resulting information exchange 210. Such negotiations may be triggered by the user (i.e. selecting an action leading to the start of the negotiations), in a timed manner (once a day, etc), upon the beginning of each conversion, or dynamically during the conversion process by transmitting parameter information to each other in connection with a parameter value change, for example. Parameters relating to task sharing include information about e.g. one or more of the following: current processing or memory load, battery status or its maximum capacity, the number of other tasks running (with higher priority), available transmission bandwidth, cost-related aspects such as current data transmission rate for available transfer path(s) or server usage cost per speech data size/duration, size/duration of the source speech signal, available encoding/decoding methods, etc.

The server 208 is in most cases superior to the device 202 as to the processing power and memory capacity, so therefore load comparisons shall be relative or otherwise scaled. The logic for carrying out task sharing can be based on simple threshold value tables, for example, that include different parameters' value ranges and resulting task sharing decisions. Negotiation may, in practise, be realized through information exchange 210 so that either the device 202 or the server 208 transmits status information to the other party that determines an optimised co-operation scenario and signals back the analysis result to initiate the conversion process.

The information exchange 210 also covers the transmission of conversion status (current task ready/still executing announcements, service down notice, service load figures, etc) and acknowledgement (reception of data successful/unsuccessful, etc) signalling messages between the device 202 and the server 208. Whenever task-sharing allocations are fixed, transferring related signalling is however not mandatory.

Information exchange 210 may take place over different communication practises, even multiple ones simultaneously (parallel data transfer) to speed things up. In one example, the device 202 establishes a voice call to the server 208 over which the speech signal or at least part of it is transmitted. The speech may be transferred in connection with the capturing phase, or after first editing it in the device 202. In another example, dedicated data transfer protocol such as the GPRS is used for speech and other information transfer. The information may be encapsulated in various data packet/frame formats and messages such as SMS, MMS, or e-mail messages.

The intermediary results provided by the device 202 and the server 208, e.g. processed speech, speech recognition parameters, or text portions, may be combined in either of said two devices 202, 208 to create the final text. Depending on the nature of the sharing (do the intermediary results represent the corresponding final text portions) the intermediary results may be alternatively transmitted as such to a further receiving entity who may perform the final combination process by applying information provided thereto by the entities 202, 208 for that purpose.

Additional services such as spell checking, machine/human translation, translation verification or further text to speech synthesis (TTS) may be located at the server 208 or another remote entity whereto the text is transmitted after completing the speech to text conversion. In the event that the aforesaid intermediary results refer directly to text portions, the portions may be transmitted independently immediately following their completion, provided that the respective additional information for combining is also ultimately transmitted.

In one implementation of the invention, the speech recognition engine of the invention residing in the server 208 and optionally in the device 202 can be personalized to utilize each user's individual speech characteristics. This indicates inputting the characteristics to a local or a remote database accessible by the recognition engine on e.g. user ID basis; the characteristics can be conveniently obtained by training the engine by providing either freely selected speech sample/corresponding text pairs to the engine or by uttering the expressions the engine is configured to request from each user based on e.g. a predefined (language-dependent) compromise between maximizing the versatility and representational value of the information space and minimizing the size thereof. Based on the analysis of the training data, the engine then determines personalized settings, e.g. recognition parameters, to be used in the recognition. Optionally the engine has been adapted to continuously update the user information (∼user profiles) by utilizing the gathered feedback; the differences between the final text corrected by the user and the automatically produced text can be analysed.

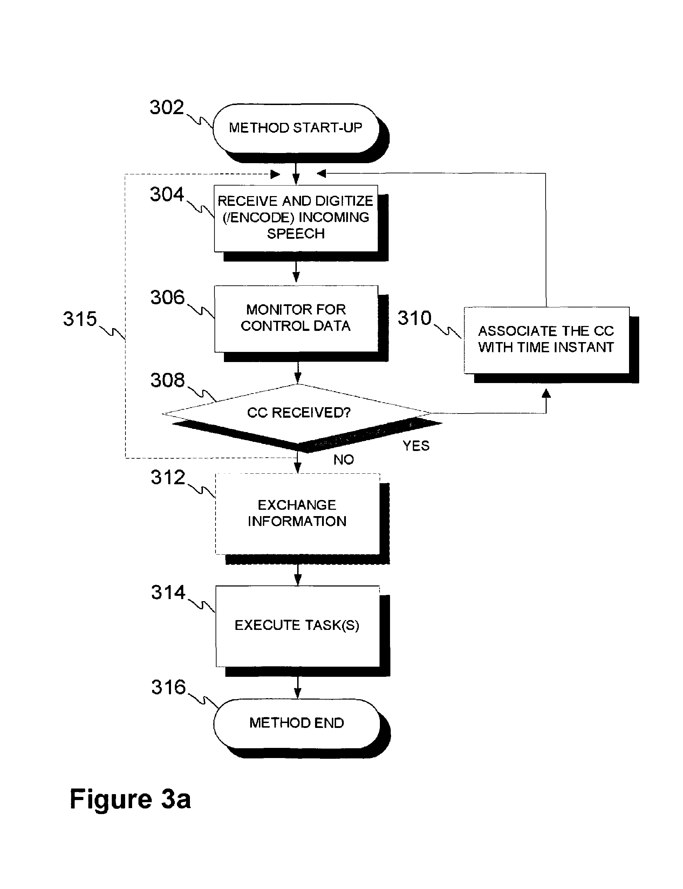

Figure 3a discloses, by way of example, a flow diagram of a method in accordance with the example of figure 2a. During method start-up step 302 various initial actions enabling the execution of the further method steps may be performed. For instance, the necessary applications, one or more, relating to speech to text conversion process may be launched in the device 202, and the respective service may be activated on the server 208 side, if any. Should the user of the device 202 desire personalized recognition, step 302 optionally includes registration or logging in to the associated application and/or service. This also takes place whenever the service is targeted to registered users only (private service) and/or offers a plurality of different service levels. For example, in an event of multiple users occasionally exploiting the conversion arrangement through the very same terminal, the registration/log-in may take place in both the device 202 and the server 208, possibly automatically based on information stored in the device 202 and current settings. Further, during start-up step 302 the settings of the conversion process may be loaded or changed, and the parameter values determining e.g. various user preferences (desired speech processing algorithms, associations between the UI and control commands, encoding method, etc) may be set. Still further, the device 202 may negotiate with the server 208 about the details of a preferable co-operation scenario in step 302 as described hereinbefore.

In step 304 the capture of the audio signal including the speech to be converted is started, i.e. transducer(s) of the device 202 begin to translate the input acoustical vibration into an electric signal digitalized with an A/D converter that may be implemented as a separate chip or combined with the transducer(s). Either the signal will be first locally captured at the device 202 as a whole before any further method steps are executed, or the capturing runs simultaneously with a number of subsequent method steps after the necessary minimum buffering of the signal has been first carried out, for example. At 306 it is shown that the device 202 is configured to monitor for a control command communicated thereto, via the control input means, simultaneously upon capturing the speech signal, wherein the control command determines one or more elements such as punctuation marks or another, optionally symbolic, elements, and optionally tasks. In case a control command is received, which is checked at 308, the nature and timing thereof is verified and stored at 310 as described hereinbefore. The speech and possible control commands may be continuously monitored (note the broken line 315) until the receipt of a stop command, for instance.

Step 312 refers to optional information exchange with other entities such as the server 208. In one example, the device 202 records the audio signal and possible control commands after which they are transmitted to the server 208 for remote execution of at least part of the conversion process. In another embodiment, the device 202 buffers and substantially real-time transmits the audio and control data to the server 208. In that scenario the block 312 could also be placed within the block group 304-310.

Step 314 refers to tasks of performing the speech to text conversion, wherein each punctuation mark or other element determined by the control command is then at least logically positioned at a text location corresponding to the communication instant relative to the speech signal so as to cultivate the speech to text conversion procedure. Block 316 denotes the end of the method execution.

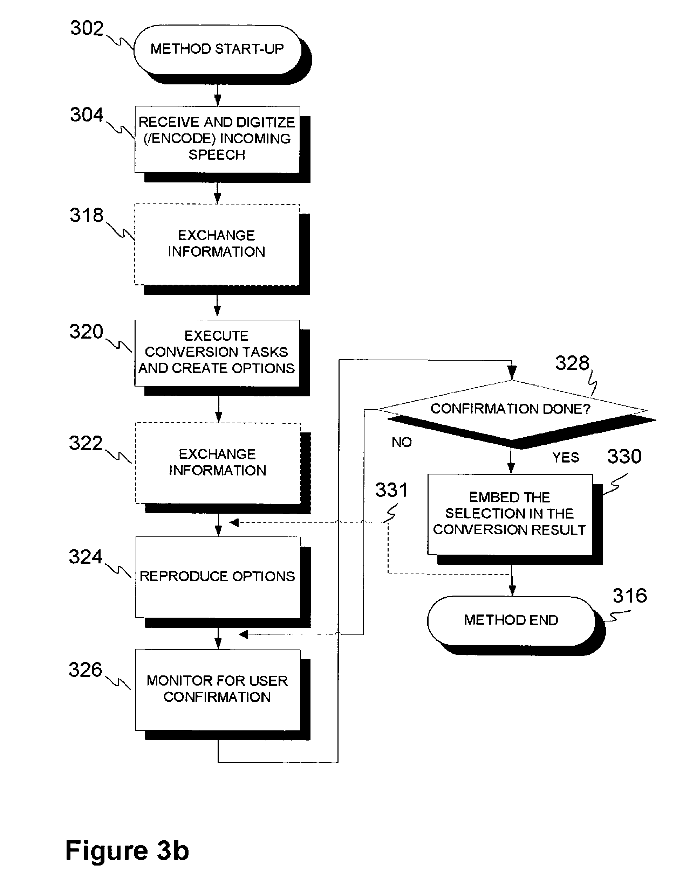

Figure 3b discloses, by way of example, a flow diagram of a method in accordance with the example of figure 2b. The blocks 302, 304, and 316 include steps that substantially match with the corresponding ones of figure 3a. At 318, if task sharing or data funneling from the device 202 towards the server 208 is applied, data representing the captured speech signal may be transferred accordingly. At 320 speech to text conversion tasks are executed the result of which possibly including one or more portions with multiple conversion options as reviewed hereinbefore. At 322, at least part of the conversion result including the options for the one or more options may be transferred to the device 202 in case the conversion was at least partially executed at the server 208. At 324 one or more options are reproduced for a single portion, preferably audibly, by the device 202 or other target device that received the result data, and user response thereto is monitored 326. Blocks 324, 326 may incorporate various, optionally adjustable, playback or repeat options. For example, playback tone (male, female, pitch, volume, etc) and type (playback the whole text including the aforesaid portions, or more specific parts including the portions, etc), may be provided as selectable options. Upon receipt of the user selection 328 it is embedded, at 330, in the conversion result, which may refer to deleting the other options and adapting the selection as a standard text between the surrounding wordings. Steps 324-330 may be repeated for remaining portions with several conversion options; see the reference numeral 331 illustrating this procedure. For example, the whole text may be reproduced starting substantially from the previous selection, or the reproduction may start from the vicinity of the next option.

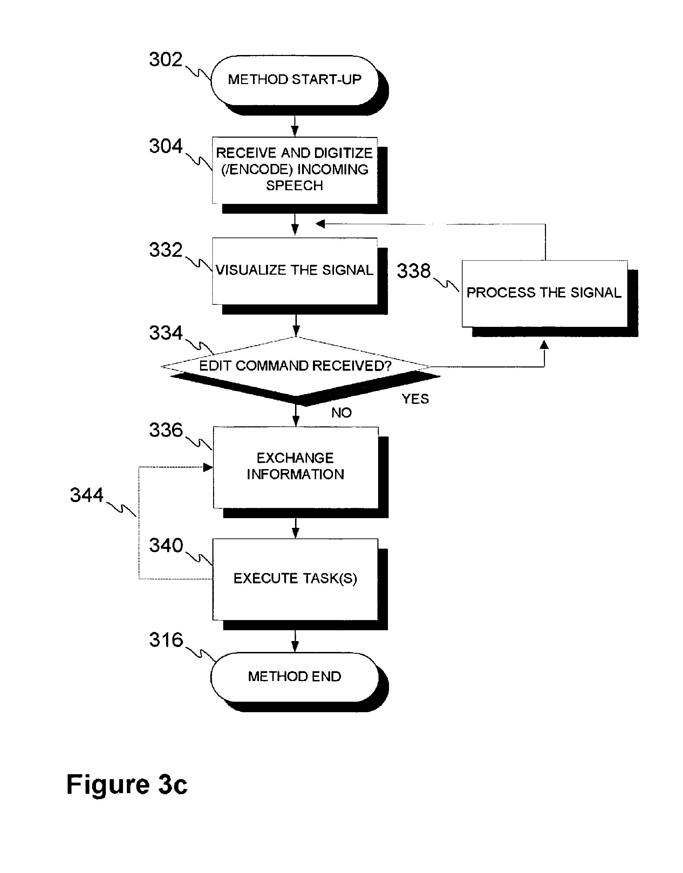

Figure 3c depicts a flow diagram concerning signal editing and data exchange potentially taking place in the context of the present invention. In this exemplary scenario step 304 may also indicate optional encoding of the signal and information exchange between the device 202 and the server 208, if at least part of the signal is to be stored in the server 208 and the editing takes place remotely from the device 202, or the editing occurs in data pieces that are transferred between the device 202 and the server 208. As an alternative to the server 208, some preferred other entity could be used as mere temporary data storage, if the device 202 does not contain enough memory for the purpose. Therefore, although not being illustrated to the widest extent for clarity reasons, may steps presented in figure 3c may comprise additional data transfer between the device 202 and the server 208/other entity, and the explicitly visualized route is simply one straightforward option.

Steps 302, 304, and 316 largely conform to the corresponding steps of figures 3a and 3b, but in step 332 the signal is visualized on the screen of the device 202 for editing. The utilized visualization techniques may be alterable by the user as reviewed in the description of figure 2c. The user may edit the signal in order to cultivate it to make it more relevant to the recognition process, and introduce preferred signal inspection functions (zoom/unzoom, different parametric representations), signal shaping functions/algorithms, and even completely re-record/insert/delete necessary portions. When the device receives an edit command from the user, see reference numeral 334, the associated action is performed in processing step 338 preferably including also the "undo" functionality. When the user is content with the editing result, the loop of steps 332, 334, and 338 is left behind, and the method execution continues from step 336 indicating information exchange between the device 202 and the server 208. The information relates to the conversion process and includes e.g. the edited (optionally also encoded) speech.

Additionally or alternatively (if e.g. the device 202 or server 208 is unable to take care of a task), necessary signalling about task sharing details (further negotiation and related parameters, etc) is transferred during this step. In step 340 the tasks of the recognition process are being carried out as determined by the selected negotiation scenario. Numeral 344 refers to optional further information exchange for transferring intermediary results such as processed speech, calculated speech recognition parameters, text portions or further signalling between the entities 202 and 208. The separate text portions possibly resulting from the task sharing shall be combined when ready to construct the complete text by the device 202, the server 208, or some other entity. The text may be reviewed to the user of the device 202 and portions thereof be subjected to corrections, or even portions of the original speech corresponding to the produced defective text may be then targeted for further conversion rounds with optionally amended settings, if the user believes it to be worth trying. The final text may be considered to be transferred to the intended location (recipient, archive, additional service, etc) during the last visualized step 316 denoting also the end of the method execution. In case the output (translated text, synthesized speech, etc) from the additional service is transmitted forward, the additional service entity shall address it based on the received service order message from the sender party, e.g. the device 202 or server 208, or remit the output back to them to be delivered onwards to another location.

A signalling chart of figure 4 discloses one option for optional information transfer between the device 202 and the server 404. It should be noted however that the presented signals reflect only one, somewhat basic case wherein multiple conversion rounds etc are not utilized. Arrow 402 corresponds to the audio signal including the speech to be converted. Signal 404 is associated with a request sent to the server 208 indicating the preferred co-operation scenario for the speech to text conversion process from the standpoint of the device 202. The server 208 answers 406 with an acknowledgement including a confirmation of the accepted scenario, which may differ from the requested one, determined based on e.g. user levels and available resources. The device 202 transmits speech recognition parameter data or at least portion of the speech signal to the server 208 as shown by arrow 408. The server 208 performs the negotiated part of the processing and transmits the results to the device 202, the results potentially including conversion options, or just acknowledges their completion 410. The results may include conversion result options for certain text portions. The device 202 then transmits approval/acknowledgement message 412 optionally including the whole conversion result to be further processed and/or transmitted to the final destination. The server 208 optionally performs at least part of the further processing and transmits the output forward 414.

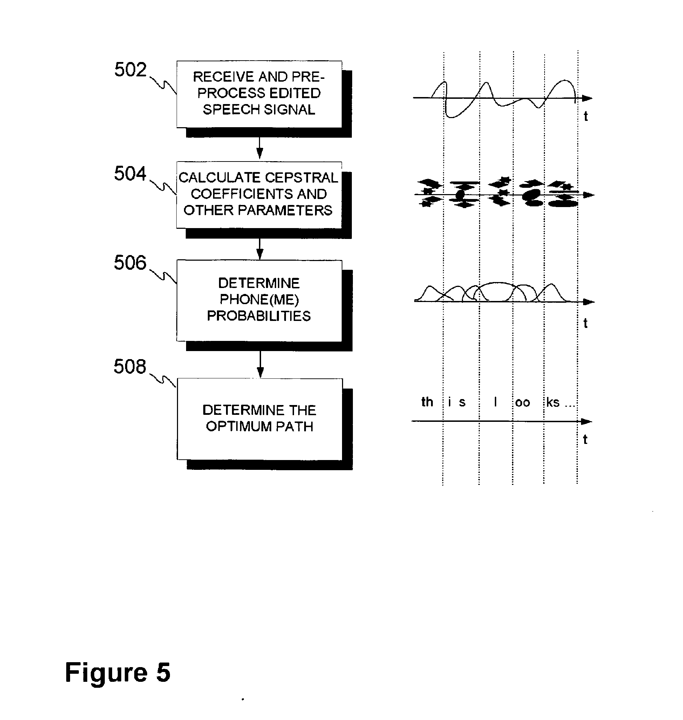

A non-limiting example of a speech recognition process including a number of steps is next previewed to provide a skilled person with insight into the utilization of e.g. task sharing aspect of the current invention. Figure 5 discloses tasks executed by a basic speech recognition engine, e.g. a software module, in the form of a flow diagram and illustrative sketches relating to the tasks' function. It is emphasized that the skilled person can utilize any suitable speech recognition technique in the context of the current invention, and the depicted example shall not be considered as the sole feasible option.

The speech recognition process inputs the digital form speech (+additional noise, if originally present and not removed during the editing) signal that has already been edited by the user of the device 202. The signal is divided into time frames with duration of a few tens or hundreds of milliseconds, for example, see numeral 502 and dotted lines. The signal is then analysed on a frame-by-frame basis utilizing e.g. cepstral analysis during which a number of cepstral coefficients are calculated by determining a Fourier transform of the frame and decorrelating the spectrum with a cosine transform in order to pick up the dominant coefficients, e.g. 10 first coefficients per frame. Also derivative coefficients may be determined for estimating the speech dynamics 504.

Next the feature vector comprising the obtained coefficients and representing the speech frame is subjected to an acoustic classifier, e.g. a neural network classifier that associates the feature vectors with different phonemes 506, i.e. the feature vector is linked to each phoneme with a certain probability. The classifier may be personalized by adjustable settings or training procedures discussed hereinbefore.

In various examples of the present invention, the classifier, and the speech recognition procedure in general, may be separately trained for each application based on the particular vocabulary/dictionary such as medical, business, or legal vocabularies, for instance, to enhance the recognition performance. The recognition context may be selectable/adjustable e.g. by the user via application settings such as a parameter the value of which adapts the recognizer to the corresponding scenario. Alternatively, the recognition process may be the same in each use scenario regardless of the context.

In various examples of the present invention, the recognition procedure may also be tailored to each source language such that the user may select the applied language e.g. via a software switch that is functionally coupled to the recognizer internal, for example. The language selection may alter the rules by which the recognizer analyzes the input speech according to the specifics of each language such as phoneme definitions.

Then the phoneme sequences that can be constructed by concatenating the phonemes possibly underlying the feature vectors may be analysed further with a HMM (Hidden Markov Model) or other suitable decoder that determines the most likely phoneme (and corresponding upper level element, e.g. word) path 508 (forming a sentence "this looks..." in the figure) from the sequences by utilizing e.g. a context dependent lexical and/or grammatical language model and related vocabulary. Such path is often called a Viterbi path and it maximises the posteriori probability for the sequence in relation to the given probabilistic model. The speech recognition process may include determining multiple user-selectable options for certain text portions, if associated probabilities do not considerably differ. Obtained control commands defining e.g. punctuation or user-confirmed recognition options may be used to section the input speech and resulting text, and optionally to alter the probabilities of surrounding recognition options. By applying the obtained punctuation, selection and e.g. context information, the recognition process may indeed provide enhanced results as also language semantics, additional user input and/or syntax (or grammar in more general sense) may be taken into account upon determining a correct recognition result.

Pondering especially the task sharing aspect, the sharing could take place between the steps 502, 504, 506, 508 and/or even within them. In one option, the device 202 and the server 208 may, based on predetermined parameters/rules or dynamic/real-time negotiations, allocate the tasks behind the recognition steps 502, 504, 506, and 508 such that the device 202 takes care of a number of steps (e.g. 502) whereupon the server 208 executes the remaining steps (504, 506, and 508 respectively). Alternatively, the device 202 and the server 208 shall both execute all the steps but only in relation to a portion of the speech signal, in which case the speech-to-text converted portions shall be finally combined by the device 202, the server 208, or some other entity in order to establish the full text. Yet in an alternative, the above two options can be exploited simultaneously; for example, the device 202 takes care of at least one task for the whole speech signal (e.g. step 502) due to e.g. a current service level explicitly defining so, and it also executes the remaining steps for a small portion of the speech concurrent with the execution of the same remaining steps for the rest of the speech by the server 208. Such flexible task division can originate from time-based optimisation of the overall speech to text conversion process, i.e. it is estimated that by the applied division the device 202 and the server 208 will finish their tasks substantially simultaneously and thus the response time perceived by the user of the device 202 is minimized from the service side. Modem speech recognition systems may reach decent recognition rate if the input speech signal is of good quality (free of disturbances and background noise, etc) but the rate may decrease in more challenging conditions. Therefore some sort of editing, control commands, and/or user-selectable options as discussed hereinbefore may noticeably enhance the performance of the basic recognition engine and overall speech to text translation.

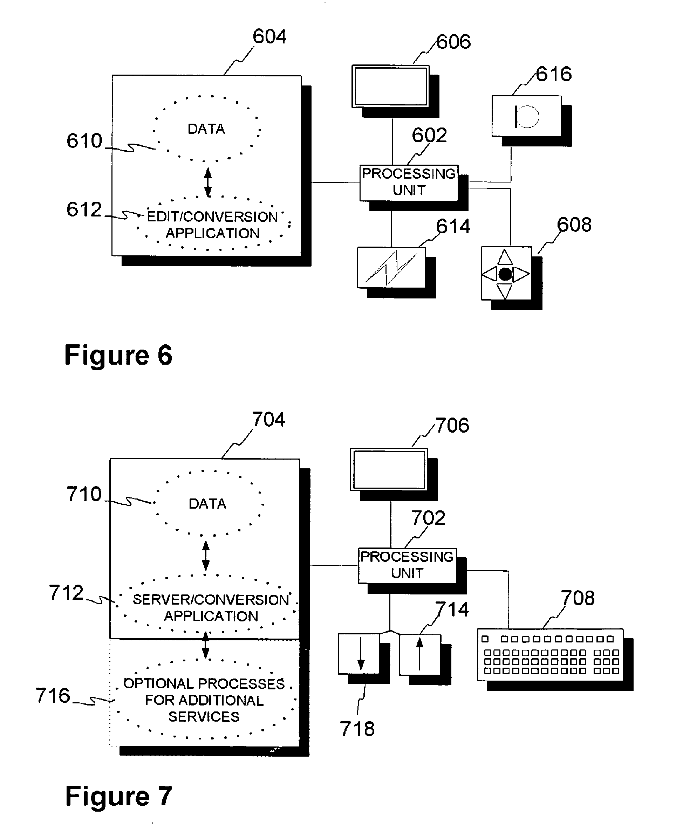

Figure 6 discloses one option for basic components of the electronic device 202 such as a computer, a mobile terminal, or a PDA either with internal or external communications capabilities. Memory 604, divided between one or more physical memory chips, comprises necessary code, e.g. in a form of a computer program/application 612 for enabling speech capturing, storing, editing, or at least partial speech to text conversion (∼speech recognition engine), and other data 610, e.g. current settings, digital form (optionally encoded) speech and speech recognition data. The memory 604 may further refer to a preferably detachable memory card, a floppy disc, a CD-ROM or a fixed storage medium such as a hard drive. The memory 604 may be e.g. ROM or RAM by nature. Processing means 602, e.g. a processing/controlling unit such as a microprocessor, a DSP, a microcontroller or a programmable logic chip, optionally comprising a plurality of co-operating or parallel (sub-)Lmits is required for the actual execution of the code stored in memory 604. Display 606 and keyboard/keypad 608 or other applicable control input means (e.g. touch screen or voice control input) provide the user of the device 202 with device control and data visualization means (∼user interface). Speech input means 616 include a sensor/transducer, e.g. a microphone and an A/D converter, to receive an acoustic input signal and to transform the received acoustic signal into a digital signal. Wireless data transfer means 614, e.g. a radio transceiver (GSM, UMTS, WLAN, Bluetooth, infrared, etc) is required for communication with other devices.

Figure 7 discloses a corresponding block diagram of the server 208. The server comprises a controlling unit 702 and a memory 704. The controlling unit 702 for controlling the speech recognition engine and other functionalities of the server 208 including the control information exchange, which may in practise take place through the data input/output means 714/718 or other communications means, can be implemented as a processing unit or a plurality of co-operating units like the processing means 602 of the mobile electronic device 202. The memory 704 comprises the server side application 712 to be executed by the controlling unit 702 for carrying out at least some tasks of the overall speech to text conversion process, e.g. a speech recognition engine. See the previous paragraph for examples of possible memory implementations. Optional applications/processes 716 may be provided to implement additional services. Data 710 includes speech data, speech recognition parameters, settings, etc. At least some required information may be located in a remote storage facility, e.g. a database, whereto the server 808 has an access through e.g. data input means 714 and output means 718. Data input means 714 comprises e.g. a network interface/adapter (Ethernet, WLAN, Token Ring, ATM, etc) for receiving speech data and control information sent by the device 202. Likewise, data output means 718 are included for transmitting e.g. the results of the task sharing forward. In practise data input means 714 and output means 718 may be combined to a single multidirectional interface accessible by the controlling unit 702.

The device 202 and the server 208 may be realized as a combination of tailored software and more generic hardware, or alternatively, through specialized hardware such as programmable logic chips.

Application code, e.g. application 612 and/or 712, defining a computer program product for the execution of the current invention can be stored and delivered on a carrier medium like a floppy, a CD, a hard drive or a memory card. The program or software may also be delivered over a communications network or a communications channel.

The scope of the invention can be found in the following claims. However, utilized devices, method steps, control command or conversion option details, etc may depend on a particular use case still converging to the basic ideas presented hereinbefore, as appreciated by a skilled reader.

## Claims

1. An electronic device for facilitating speech to text conversion procedure comprising:
- a speech input means for obtaining a digital speech signal,
- a control input means for communicating a control command relating to the digital speech signal while obtaining the digital speech signal,
- a processing means for temporally associating the control command with a substantially corresponding time instant in the digital speech signal to which the control command was directed,
wherein the control command determines one or more punctuation marks, symbols, or other control elements implying text manipulation, to be physically, as such in the case of said punctuation marks and symbols, or at least logically, via the manipulation of text in the case of said other control elements, positioned at a text location corresponding to the communication instant relative to the digital speech signal so as to procure the speech to text conversion procedure locally, in which case the device further comprises a speech recognition engine for performing tasks of speech to text conversion, or remotely, in which case the electronic device further comprises a data transfer means for sending digital data representing the digital speech signal and the control command to a remote entity for the conversion, or by a shared conversion procedure between the electronic device and the remote entity, in which case the electronic device further comprises at least part of the speech recognition engine and said data transfer means.

2. The electronic device of claim 1, wherein the control command additionally determines one or more predetermined actions, such as a recording pause of predetermined length, to be performed in response to obtaining the control command.

3. The electronic device of any preceding claim, further comprising a speech recognition engine for performing, tasks of speech to text conversion, adapted to apply the information provided by the control command in producing the conversion result.

4. The electronic device of any preceding claim, wherein said control input means comprises a number of input elements each associated with at least one of said one or more punctuation marks, symbols, or other control elements implying text manipulation.

5. The electronic device of any preceding claim, comprising a text-to-speech synthesizer and an audio output means, and being configured to, upon obtaining at least partial speech to text conversion result including a converted portion, such as one or more words or sentences, which comprises multiple, two or more, user-selectable conversion result options, to reproduce, via said audio output means, one or more of said options for said portion, and to communicate, via said control input means, a user selection of one of said multiple user-selectable options so as to enable confirming a desired conversion result for said portion.

6. A server for carrying out at least part of speech to text conversion, the server being operable in a communications network, the server comprising:
- a data input means for receiving digital data sent by a terminal device, said digital data representing speech signal, and one or more control commands, each command temporally associated with a certain time instant in the digital data and determining one or more punctuation marks, symbols, or other control elements implying text manipulation, and
- at least part of a speech recognition engine for carrying out tasks of digital data to text conversion, wherein the engine is adapted to position physically, as such in the case of said punctuation marks and symbols, or at least logically, via the manipulation of text in the case of said other control elements, each said punctuation mark, symbol or other control element implying text manipulation at a text location corresponding to the certain time instant relative to the speech signal represented by the received digital data so as to cultivate the speech to text conversion procedure at least partially procured by the server.

7. The server of claim 6, further comprising a data output means for transmitting at least part of the output of the performed tasks to an external entity.

8. The server of any of claims 6-7, wherein said at least part of a speech recognition engine is configured to produce a speech to text conversion result including a converted portion, such as one or more words or sentences, comprising multiple, two or more, conversion result options, when the correctness of the conversion result is deemed as uncertain for the portion according to predetermined criterion, and a data output means for communicating the conversion result and at least indication of the options to the terminal or another remote device and optionally triggering the terminal comprising a text-to-speech synthesizer and an audio output means, or another remote device, to audibly reproduce one or more of said options so as to enable confirming a desired conversion result for the portion by the user of the terminal or another remote device in response to the audible reproduction.

9. A method for converting speech into text comprising:
- obtaining a digital speech signal and a control command relating thereto in a temporally overlapping fashion, wherein the control command determines one or more punctuation marks, symbols, or other control elements implying text manipulation,
- associating the control command with a substantially corresponding time instant in the digital speech signal to which the control command was directed, and
- performing a speech to text conversion, wherein each punctuation mark, symbol or other control element implying text manipulation determined by the control command is physically, as such in the case of said punctuation marks and symbols, or at least logically, via the manipulation of text in the case of said other control elements, positioned at a text location corresponding to the communication instant relative to the speech signal so as to procure the speech to text conversion procedure.

10. The method of claim 9, further comprising:
- obtaining a speech to text conversion result including a converted portion, such as one or more words or sentences, which comprises multiple, two or more, conversion result options,
- audibly reproducing one or more of said options,
- obtaining a user confirmation of one of said one or more options, and
- selecting the conversion in respect of the converted portion in accordance with the obtained confirmation.

11. A computer executable program comprising code means adapted, when run on a computer, to carry out the method actions as defined by claim 9 or 10.

12. A carrier medium comprising the computer executable program of claim 11.

13. The electronic device of claim 1, comprising a mobile terminal, a dictating machine, or a personal digital assistant (PDA).

14. The electronic device or server of claim 1 or 6, further configured to, responsive to a received user input, receive new speech or corresponding text and associate said new speech or said corresponding text with existing speech or textual data converted therefrom, respectively, such that the obtained conversion result comprises said corresponding text located in accordance with the user input.

## Patentansprüche

1. Elektronikvorrichtung zur Umsetzung eines Sprache-zu-Text-Konvertierungsverfahrens, aufweisend:
- Spracheingabemittel zum Erhalten eines digitalen Sprachsignals,
- eine Steuereingabevorrichtung zur Übermittlung eines Steuerbefehls bezüglich des digitalen Sprachsignals während des Erhalts des digitalen Sprachsignals,
- eine Prozessoreinrichtung zum temporären Verknüpfen des Steuerbefehls mit einem im Wesentlichen korrespondierenden Zeitmoment in dem digitalen Sprachsignal, dem der Steuerbefehl zugeordnet war,
wobei der Steuerbefehl eine oder mehrere Satzzeichen, Symbole oder andere eine Texterzeugung mit einschließende Steuerelemente bestimmt, d.h. im Falle der Satzzeichen und Symbole diese physikalisch, oder zumindest in dem Fall der besagten anderen Steuerelemente dies logisch via der Texterzeugung tut, positioniert an einer Textstelle entsprechend dem Kommunikationsmoment relativ zu dem digitalen Sprachsignal, um so das Konvertierungsverfahren von Sprache zu Text lokal zu erwirken, in welchem Fall die Vorrichtung ferner Spracherkennungsmittel zum Ausführen von Aufgaben einer Sprache-zu-Text-Konvertierung aufweist, oder extern, in welchem Fall die Elektronikvorrichtung ferner Datenübertragungsmittel zum Senden von Digitaldaten an eine externe Entität zur Konvertierung umfasst, welche Digitaldaten das digitale Sprachsignal und den Steuerbefehl darstellen, oder durch ein geteiltes Konvertierungsverfahren zwischen der Elektronikvorrichtung und der externen Entität, in welchem Fall die Elektronikvorrichtung ferner zumindest einen Teil der Spracherkennungsmittel und der besagten Datenübertragungsmittel aufweist.

2. Elektronikvorrichtung nach Anspruch 1, wobei der Steuerbefehl zusätzlich eine oder mehrere vorbestimmte Aktionen bestimmt, wie beispielsweise eine Aufnahmepause vorbestimmter Länge, die in Antwort auf den Erhalt des Steuerbefehls ausgeführt wird.

3. Elektronikvorrichtung nach einem vorangehenden Anspruch, ferner aufweisend Spracherkennungsmittel zum Ausführen von Aufgaben einer Sprache-zu-Text-Konvertierung, dazu angepasst, die durch den Steuerbefehl vorgesehene Information bei der Produktion des Konvertierungsergebnisses anzuwenden.

4. Elektronikvorrichtung nach einem vorangehenden Anspruch, wobei die Steuereingabemittel eine Anzahl von Eingabeelementen aufweist, von denen jedes jeweils mit mindestens einem der besagten oder mehreren Satzzeichen, Symbolen oder anderen Steuerelementen eine Texterzeugung einschließend verknüpft ist.

5. Elektronikvorrichtung nach einem vorangehenden Anspruch, aufweisend einen Text-zu-Sprache-Synthesizer und Audioausgabemittel, ferner dazu konfiguriert, nach Erhalt von zumindest einem teilweisen Sprache-zu-Text-Konvertierungsergebnisses einschließend einen konvertierten Abschnitt, wie beispielsweise einem oder mehreren Wörtern oder Sätze, das/die mehrere, zwei oder mehrere, Anwender-wählbare KonvertierungsErgebnisoptionen beinhaltet, über die besagten Audioausgabemittel eine oder mehrere der besagten Optionen für diesen Abschnitt zu reproduzieren, und über die besagten Steuereingabemittel zu kommunizieren, und zwar eine Anwender-gewählte Option aus einer der mehreren besagten Anwenderwählbaren Optionen, um so eine Bestätigung eines gewünschten Konvertierungsergebnisses für diesen Abschnitt zu ermöglichen.

6. Server zum Ausführen einer zumindest teilweisen Sprache-zu-Text-Konvertierung, wobei der Server in einem Kommunikationsnetzwerk betreibbar ist, und der Server aufweist:
- Dateneingabemittel zum Erhalten von Digitaldaten, die über eine Terminalvorrichtung gesendet werden, welche digitalen Daten ein Sprachsignal und eine oder mehrere Steuerbefehle darstellen, wobei jeder Befehl temporär mit einem bestimmten Zeitmoment in den digitalen Daten verknüpft ist, und eine oder mehrere Satzzeichen, Symbole oder andere Steuerelemente eine Texterzeugung einschließend bestimmt, und
- zumindest einen Teil von Spracherkennungsmitteln zum Ausführen von Aufgaben einer Konvertierung von digitalen Daten zu Text, wobei die Mittel dazu bestimmt sind, von den besagten Satzzeichen, Symbolen oder anderen Steuerelementen, im Falle von Satzzeichen und Symbolen diese physikalisch, und im Falle der anderen Steuerelemente eine Texterzeugung einbeziehend diese an einer Textstelle entsprechend dem bestimmten Zeitmoment relativ zu dem Sprachsignal, das durch die erhaltenen Digitaldaten repräsentiert ist, über die Erzeugung von Text zumindest logisch zu positionieren, um so das Konvertierungsverfahren von Sprache zu Text zumindest teilweise durch den Server ausgeführt zu erledigen.

7. Server nach Anspruch 6, ferner aufweisend Datenausgabemittel zum Übertragen von zumindest einem Teil der Ausgabe der ausgeführten Aufgaben an eine externe Entität.

8. Server nach einem der Ansprüche 6 - 7, wobei der besagte Mindestteil der Spracherkennungsmittel dazu konfiguriert ist, ein Sprache-zu-Text-Konvertierungsergebnis einschließend einen konvertierten Abschnitt, wie beispielsweise ein oder mehrerer Wörter oder Sätze zu erzeugen, aufweisend mehrere, zwei oder mehrere Konvertierungsergebnisoptionen, wenn die Richtigkeit des Konvertierungsergebnisses als unbestimmt für den Abschnitt gemäß der vorbestimmten Kriterien bestimmt ist, und Datenausgabemittel zum Kommunizieren des Konvertierungsergebnisses und zumindest Aufzeigen der Optionen am Terminal oder einer anderen externen Vorrichtung und zum optionalen Triggern des Terminals, einen Text-zu-Sprach-Synthesizer aufweisend und Audioausgabemittel oder andere Externvorrichtungen, um eine oder mehrere der besagten Optionen audibel zu reproduzieren, um so eine Bestätigung des erwünschten Konvertierungsergebnisses für den Abschnitt durch den Anwender des Terminals oder einer anderen Externvorrichtung in Antwort auf die audible Reproduktion bestätigen zu können.

9. Verfahren zum Konvertieren von Sprache zu Text, aufweisend:
- Erhalten eines digitalen Sprachsignals und eines diesbezüglichen Steuerbefehls in einer temporär überlagernden Weise, wobei der Steuerbefehl eine oder mehrere Satzzeichen, Symbole oder andere Steuerelemente eine Texterzeugung einbeziehend bestimmt,
- Verknüpfen des Steuerbefehls mit einem im Wesentlichen entsprechenden Zeitmoment in dem digitalen Sprachsignal, zu dem der Steuerbefehl ausgerichtet war, und
- Ausführen einer Sprache-zu-Text-Konvertierung, wobei jedes Satzzeichen, Symbol oder andere Steuerelement eine Texterzeugung einschließend durch den Steuerbefehl physikalisch bestimmt ist, wie beispielsweise in dem Fall der Satzzeichen und Symbole, oder in dem Falle der besagten anderen Steuerelemente zumindest logisch bestimmt ist über die Handhabung von Text, positioniert an einer Textstelle entsprechend dem Kommunikationsmoment relativ zu dem Sprachsignal, um so das Konvertierungsverfahren von Sprache zu Text auszuführen.

10. Verfahren nach Anspruch 9, ferner aufweisend:
- Erhalten eines Sprache-zu-Text-Konvertierungsergebnisses einschließend einen konvertierten Abschnitt, wie beispielsweise ein oder mehrere Wörter oder Sätze, das mehrere, zwei oder mehrere Konvertierungsergebnisoptionen aufweist,
- eine audible Reproduzierung von einer oder mehreren dieser Optionen,
- Erhalt einer Anwenderbestätigung einer der besagten einen oder mehreren Option(en), und
- Auswählen der Konvertierung in Bezug auf den konvertierten Abschnitt gemäß der erhaltenen Bestätigung.

11. Computer ausführbares Programm, aufweisend Programmcode-Mittel, die dazu bestimmt sind, die Verfahrensschritte gemäß Definition nach Anspruch 9 oder 10 auszuführen, wenn das Programm auf einem Computer läuft.

12. Trägermedium, aufweisend das Computer ausführbare Programm nach Anspruch 11.

13. Elektronikvorrichtung nach Anspruch 1, aufweisend ein mobiles Terminal, ein Diktiergerät oder einen Personal-Digital-Assistent (PDA).

14. Elektronikvorrichtung oder Server nach Anspruch 1 oder 6, ferner dazu konfiguriert, auf eine erhaltene Anwendereingabe responsiv zu agieren, neue Sprache oder entsprechenden Text aufzunehmen und diese neue Sprache oder den entsprechenden Text mit bestehenden Sprach- oder Textdaten, die hiervon konvertiert wurden, jeweils zu verknüpfen, derart, dass das Konvertierungsergebnis den entsprechenden Text gemäß der Anwendereingabe aufweist.

## Revendications

1. Dispositif électronique pour faciliter une procédure de conversion de parole en texte, comprenant :
- un moyen d'entrée de parole pour obtenir un signal de parole numérique,
- un moyen d'entrée de commande pour communiquer une instruction de commande relative au signal de parole numérique tout en obtenant le signal de parole numérique,
- un moyen de traitement pour associer temporellement l'instruction de commande à un instant de temps correspondant sensiblement au signal de parole numérique auquel l'instruction de commande est adressée,
dans lequel l'instruction de commande détermine une ou plusieurs marques de ponctuation, symboles ou autres éléments de commande impliquant une manipulation de texte, à positionner physiquement, en tant que tel dans le cas desdites marques de ponctuation et symboles, ou au moins logiquement, par le biais de la manipulation de texte dans le cas desdits autres éléments de commande, à un emplacement de texte correspondant à l'instant de communication relatif au signal de parole numérique afin de procurer la procédure de conversion de parole en texte localement, auquel cas le dispositif comprend en outre un moteur de reconnaissance de parole pour effectuer des tâches de conversion de parole en texte, ou à distance, auquel cas le dispositif électronique comprend en outre un moyen de transfert de données pour envoyer des données numériques représentant le signal de parole numérique et l'instruction de commande à une entité distante pour la conversion, ou par une procédure de conversion partagée entre le dispositif électronique et l'entité distante, auquel cas le dispositif électronique comprend en outre au moins une partie du moteur de reconnaissance de parole et dudit moyen de transfert de données.

2. Dispositif électronique selon la revendication 1, dans lequel l'instruction de commande détermine en outre une ou plusieurs actions prédéterminées, comme une pause d'enregistrement d'une longueur prédéterminée, à effectuer en réponse à l'obtention de l'instruction de commande.

3. Dispositif électronique selon l'une quelconque des revendications précédentes, comprenant en outre un moteur de reconnaissance de parole pour effectuer des tâches de conversion de parole en texte, apte à appliquer les informations fournies par l'instruction de commande à la génération du résultat de conversion.

4. Dispositif électronique selon l'une quelconque des revendications précédentes, dans lequel ledit moyen d'entrée de commande comprend un nombre d'éléments d'entrée qui sont chacun associés à au moins un desdits une ou plusieurs marques de ponctuation, symboles ou autres éléments de commande impliquant une manipulation de texte.

5. Dispositif électronique selon l'une quelconque des revendications précédentes, comprenant un synthétiseur de texte en parole et un moyen de sortie audio, et étant configuré pour, à l'obtention d'un résultat de conversion de parole en texte au moins partiel comprenant une portion convertie, comme un ou plusieurs mots ou phrases, qui comprend de multiples options, deux ou plus, de résultats de conversion sélectionnables par l'utilisateur, pour reproduire, par le biais dudit moyen de sortie audio, une ou plusieurs desdites options pour ladite portion, et pour communiquer, par le biais dudit moyen d'entrée de commande, une sélection d'utilisateur de l'une desdites multiples options sélectionnables par l'utilisateur afin de permettre de confirmer un résultat de conversion souhaité pour ladite portion.

6. Serveur pour effectuer au moins une partie d'une conversion de parole en texte, le serveur étant utilisable dans un réseau de communication, le serveur comprenant :
- un moyen d'entrée de données pour recevoir des données numériques envoyées par un dispositif terminal, lesdites données numériques représentant un signal de parole, et une ou plusieurs instructions de commande, chaque instruction étant temporellement associée à un certain instant de temps dans les données numériques et déterminant une ou plusieurs marques de ponctuation, symboles ou autres éléments de commande impliquant une manipulation de texte, et
- au moins une partie d'un moteur de reconnaissance de parole pour effectuer des tâches de conversion de données numériques en texte, dans lequel le moteur est apte à positionner physiquement, en tant que tel dans le cas desdites marques de ponctuation et symboles, ou au moins logiquement, par le biais d'une manipulation de texte dans le cas desdits autres éléments de commande, chaque dite marque de ponctuation, symbole ou autre élément de commande impliquant une manipulation de texte à un emplacement de texte correspondant à l'instant de temps relatif au signal de parole représenté par les données numériques reçues afin d'adopter la procédure de conversion de parole en texte au moins partiellement procurée par le serveur.

7. Serveur selon la revendication 6, comprenant en outre un moyen de sortie de données pour transmettre au moins une partie de la sortie des tâches effectuées à une entité externe.

8. Serveur selon l'une quelconque des revendications 6 et 7, dans lequel ladite au moins une partie d'un moteur de reconnaissance de parole est configurée pour générer un résultat de conversion de parole en texte comprenant une portion convertie, comme un ou plusieurs mots ou phrases, qui comprend de multiples options, deux ou plus, de résultats de conversion, lorsque l'exactitude du résultat de conversion est considérée comme étant incertaine pour la portion en fonction d'un critère prédéterminé, et un moyen de sortie de données pour communiquer le résultat de conversion et au moins une indication des options au terminal ou à un autre dispositif distant et facultativement déclencher le terminal comprenant un synthétiseur de texte en parole et un moyen de sortie audio, ou un autre dispositif distant, pour reproduire de manière audible une ou plusieurs desdites options afin de permettre de confirmer un résultat de conversion souhaité pour la portion par l'utilisateur du terminal ou un autre dispositif distant en réponse à la reproduction audible.

9. Procédé de conversion de parole en texte, comprenant :
- l'obtention d'un signal de parole numérique et d'une instruction de commande relative à celui-ci d'une manière à chevauchement temporel, dans lequel l'instruction de commande détermine une ou plusieurs marques de ponctuation, symboles ou autres éléments de commande impliquant une manipulation de texte,
- l'association de l'instruction de commande à un instant de temps correspondant sensiblement au signal de parole numérique auquel l'instruction de commande est adressée, et
- l'exécution d'une conversion de parole en texte, dans lequel chaque marque de ponctuation, symbole ou autre élément de commande impliquant une manipulation de texte déterminé par l'instruction de commande est physiquement, en tant que tel dans le cas desdites marques de ponctuation et symboles, ou au moins logiquement, par le biais d'une manipulation de texte dans le cas d'autres éléments de commande, positionné à un emplacement de texte correspondant à l'instant de communication relatif au signal de parole afin de procurer la procédure de conversion de parole en texte.

10. Procédé selon la revendication 9, comprenant en outre :
- l'obtention d'un résultat de conversion de parole en texte comprenant une portion convertie, comme un ou plusieurs mots ou phrases, qui comprend de multiples options, deux ou plus, de résultats,
- la reproduction audible d'une ou plusieurs desdites options,
- l'obtention d'une confirmation d'utilisateur de l'une desdites une ou plusieurs options, et
- la sélection de la conversion en ce qui concerne la portion convertie en fonction de la confirmation obtenue.

11. Programme exécutable par ordinateur comprenant un moyen de code apte, lorsqu'il est exécuté sur un ordinateur, à effectuer des actions de procédé selon la revendication 9 ou 10.

12. Support porteur comprenant le programme exécutable par ordinateur selon la revendication 11.

13. Dispositif électronique selon la revendication 1, comprenant un terminal mobile, une machine à dicter, ou un assistant numérique personnel (PDA).

14. Dispositif électronique ou serveur selon la revendication 1 ou 6, configuré en outre pour, en réponse à une entrée d'utilisateur reçue, recevoir une nouvelle parole ou un texte correspondant et associer ladite nouvelle parole ou ledit texte correspondant respectivement à une parole existante ou à des données de texte converties à partir de celle-ci afin que le résultat de conversion obtenu comprenne ledit texte correspondant situé en fonction de l'entrée d'utilisateur.
